(19) **Europäisches Patentamt**
**European Patent Office**
**Office européen des brevets**

(11) Veröffentlichungsnummer : **0 315 935 B1**

(12) **EUROPÄISCHE PATENTSCHRIFT**

(45) Veröffentlichungstag der Patentschrift :
**08.05.91 Patentblatt 91/19**

(51) Int. Cl.$^5$ : **B65D 43/16, B65D 75/22,**
**A45C 11/34**

(21) Anmeldenummer : **88118533.4**

(22) Anmeldetag : **08.11.88**

(54) **Packung mit Schachtel und Inhalt.**

(30) Priorität : **12.11.87 DE 3738395**

(43) Veröffentlichungstag der Anmeldung :
**17.05.89 Patentblatt 89/20**

(45) Bekanntmachung des Hinweises auf die
Patenterteilung :
**08.05.91 Patentblatt 91/19**

(84) Benannte Vertragsstaaten :
**AT BE CH DE ES FR GB GR IT LI LU NL SE**

(56) Entgegenhaltungen :
**DE-U- 8 518 083**
**DE-U- 8 707 109**

(73) Patentinhaber : **Fan Development Co.**
**Room 2607 Wank Tai House Wang Fuk Court**
**Tai Po, N.T. (HK)**

(72) Erfinder : **Der Erfinder hat auf seine Nennung**
**verzichtet**

(74) Vertreter : **Böhme, Volker, Dipl.-Ing. et al**
**Patentanwälte Dipl.-Ing. E. Kessel Dipl.Ing. V.**
**Böhme Karolinenstrasse 27**
**W-8500 Nürnberg 1 (DE)**

## Beschreibung

Die Erfindung betrifft eine Packung, bestehend aus einer Schachtel, die aus zwei Rahmen mit jeweils einem Deckel gebildet ist, wobei die Deckel über einen Verbindungsstreifen ineinander übergehen und die freien Seiten der Rahmen bei geschlossener Schachtel aufeinanderliegen, sowie je einer Einlage aus Kunststoff, die mit dem Deckel festverbunden ist und eine Festlegeeinrichtung aufweist, mit der Gebrauchsstücke gehalten werden.

Bei einer bekannten (DE-U-8 518 083) Packung dieser Art ist die Schachtel ein sogenanntes Mäppchen und ist die Packung ein Schüleretui. Das Mäppchen bzw. die Schachtel dieses Schüleretuis weist die herkömmliche Gestaltung eines Schüleretuis auf. Und diese Mäppchen für Schüleretuis werden nur für Schüleretuis verwendet. Es werden also auf die Schüleretui-Gebrauchsstücke abgestellte besondere Schachteln, nämlich Mäppchen gefertigt, die in einer relativ geringen Stückzahl gefertigt werden und somit entsprechend teuer sind.

Es ist auch eine Packung bekannt (DE-U-8 707 109), bei der die Schachtel-Rahmen hohl und geschlossen umlaufend sind und die deckelfreien Seiten der Rahmen je einen Sims aufweisen, die einander übergreifen. Diese Schachtel ist eine abgeänderte VideocassettenSchachtel, in der die Gebrauchsstücke unmittelbar liegen, wobei die Schachtel an die Gebrauchsstücke angepaßt ist. Auch diese Schachtel wird nur in einer relativ geringen Stückzahl gefertigt und ist somit entsprechend teuer.

Aufgabe der Erfindung ist es daher, eine Packung der eingangs genannten Art zu schaffen, deren Schachtel sehr preiswert herstellbar ist. Die erfindungsgemäße Packung ist, diese Aufgabe lösend, dadurch gekennzeichnet, daß die Rahmen hohl und geschlossen umlaufend sind, die deckelfreien Seiten der Rahmen je einen Sims aufweisen, die einander übergreifen, wobei die Rahmen eine Innenfläche von etwa 11 × 19 cm umgrenzen und im geschlossenen Zustand die Innenraumhöhe etwa 3 cm beträgt, daß an der Außenseite eine Klarsichtfolie randseitig angeschweißt ist, die eine einseitig offene Tasche bildet, und daß die Einlagen in ihren Abmessungen der Rahmengröße entsprechen und flach oder tiefgezogen ausgebildet und an den Deckel geklebt sind. Es wird sowit eine übliche, ungeänderte Videocassetten-Schachtel verwendet.

Da sehr viele Videokassetten vertrieben werden, wird die Videokassetten-Schachtel, d.h. die Videokassetten-Box, sehr preiswert hergestellt. Es sind nur geringe Abänderungen der herkömmlichen Einlagen nötig, um diese in eine Videokassetten-Schachtel einlegen zu können. Da bei Videokassetten-Schachteln an der Außenseite von einer Klarsichtfolie, die randseitig befestigt ist, eine mindestens einseitig offene Tasche gebildet ist, läßt sich in diese Tasche ein Papierstück einschieben, das mit Angaben bedruckt ist, die auf die Gebrauchsstücke der Einlage Bezug nehmen. Die Einlage weist in der Regel eine Mehrzahl von dungsgemäßen Packung oder mit Werbung bedruckt ist.

Der Inhalt der erfindungsgemäßen Packung ist z.B. eine flache Karton-Einlage, auf der mit Gummiband Schreibstifte oder Malstifte, Stiftspitzer, Radiergummi, Lineal oder Winkelmesser lösbar festgelegt sind. Es wird z.B. in jedem Rahmen der zweiteiligen Schachtel solch eine Einlage eingesetzt. In der Regel sind Maßnahmen vorgesehen, um ein unerwünschtes Herausnehmen oder Herausfallen der Einlage zu verhindern, indem die Einlage in dem Rahmen klemmt oder an der Innenseite des Deckels angeklebt ist.

Eine andere geeignete Einlage ist eine tiefgezogene Folie aus Kunststoff mit einem umlaufenden Randsims auf der einen Seite und tiefgezogenen Vertiefungen auf der anderen Seite, in die Farbe, Pinsel und andere Geräte eingelegt sind ; diese Gebrauchsstücke stellen ein Schmink-Set dar. In den zweiten Rahmen wird eine Abdeckung aus tiefgezogener Kunststoff-Folie eingelegt, welche bei geschlossener Schachtel die Lage der Gebrauchsstücke in den Vertiefungen sichert. Bei einer anderen Ausführungsform sind in geeigneten tiefgezogenen Vertiefungen die Gebrauchsstücke eines künstlichen Fingernägel-Sets vorgesehen.

In der Zeichnung ist eine bevorzugte Ausführungsform der Erfindung dargestellt und zeigt

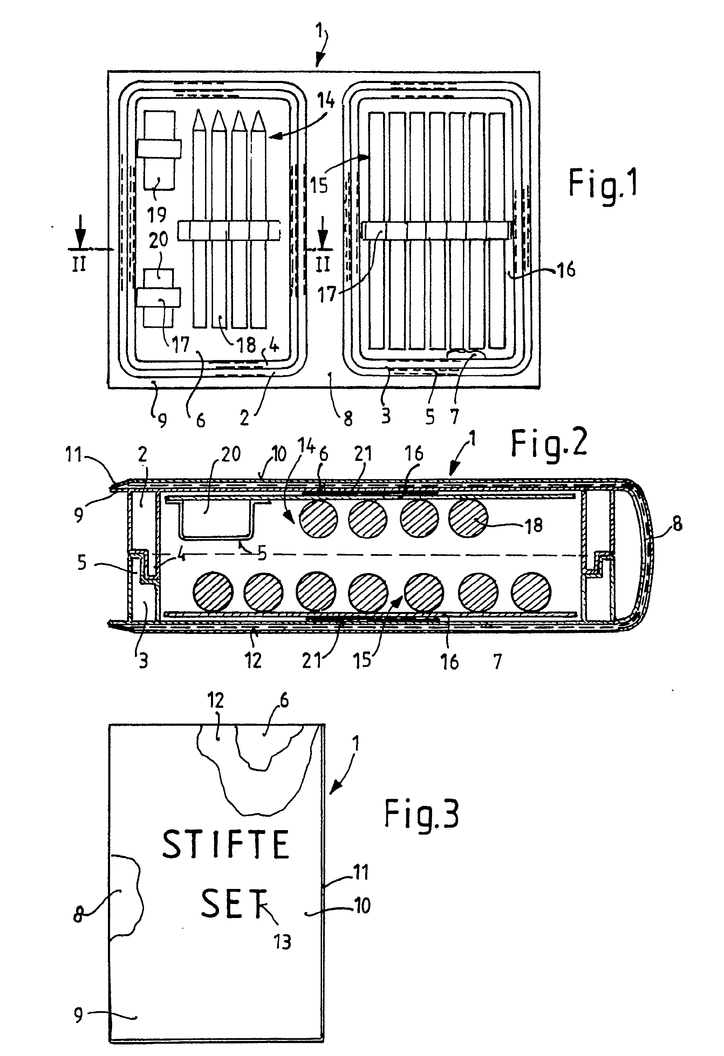

Fig. 1 eine Draufsicht auf eine aufgeklappte Packung mit Schachtel und Inhalt

Fig. 2 einen Schnitt gemäß Linie II-II in Fig. 1, in einem gegenüber Fig. 1 vergrößerten Maßstab und

Fig. 3 eine Vorderansicht der geschlossenen Packung gemäß Fig. 1.

Die Packung gemäß Zeichnung besitzt eine insgesamt aus Kunststoff bestehende Schachtel 1, die zwei im wesentlichen rechteckige Rahmen 2, 3 ausreichender Steifigkeit aufweist. Beide Rahmen sind im Querschnitt hohl, der Dicke nach von Hand zusammendrückbar und nach außen hin abgestuft. Es weist nämlich der obere Rahmen 2 einen äußeren Sims 4, der einen inneren Sims 5 des unteren Rahmens 3 übergreift. Die beiden Rahmen 2, 3 gehen an der den Simsen 4, 5 gegenüberliegenden Seite jeweils in einen Deckel 6, 7 über, die beide über einen Verbindungsstreifen 8 miteinander verbunden sind, der mit den Deckeln einstükkig ist und den Abstand der beiden Rahmen 2, 3 voneinander bestimmt. An den drei nicht vom Verbindungsstreifen 8 überragenden Seiten ist jeder Rahmen von einem überstand 9 der Deckel 6, 7 überragt.

Eine Klarsichtfolie 10 erstreckt sich außen über beide Deckel 6, 7 und den Verbindungsstreifen 8, ist am unteren Rand und den äußeren seitlichen Rändern der Deckel entlang einer Randlinie 11 mit den Deckeln verschweißt und ist am oberen Rand von den Deckeln und dem Verbindungsstreifen lose. In die so gebildete Tasche ist ein rechteckiges Papierstück 12 geschoben, das mit Angaben 13 bedruckt ist, die durch die Klarsichtfolie 10 hindurch sichtbar sind.

In beiden Rahmen 2, 3 der Schachtel 1 ist Inhalt 14, 15 untergebracht, der jeweils eine flache, kartonartige Einlage 16 umfaßt. Die Einlage 16 ist mit den Außenabmessungen den Innenabmessungen des Rahmens 2, 3 angepaßt und an der Innenseite des jeweiligen Dekkels 6, 7 mittels eines doppelseitig klebenden Klebestückes 21 angeklebt. An jeder Einlage 16 sind Festlegeeinrichtungen 17 in Form von Schlaufen aus Gummiband vorgesehen, in denen Gebrauchsstücke 18, 19, 20 in Form von Schreib- oder Malstiften, einem Radiergummi und einem Stiftspitzer gehalten sind.

Bei einer anderen Ausführungsform sind die Gebrauchsstücke die Bestandteile eines Maniküre-Sets, z.B. Nagelschere, Hautschere, Nagelfeile. Bei einer weiteren Ausführungsform ist die Einlage aus Kunststoff tiefgezogen und weist ringsum abgewinkelte Wandungen auf, auf denen sie steht. Die Einlage bildet einen Boden, in den mindestens eine Höhlung tiefgezogen ist, die eine Festlegeeinrichtung bildet und in die eine Parfümflasche eingelegt ist.

## Ansprüche

1. Packung, bestehend aus einer Schachtel, die aus zwei Rahmen (2, 3) mit jeweils einem Deckel (6, 7) gebildet ist, wobei die Deckel über einen Verbindungsstreifen (8) ineinander übergehen und die freien Seiten der Rahmen bei geschlossener Schachtel aufeinanderliegen, sowie je einer Einlage (16) aus Kunststoff, die mit dem Deckel festverbunden ist und eine Festlegeeinrichtung (17) aufweist, mit der Gebrauchsstücke (18-20) gehalten werden, dadurch gekennzeichnet, daß die Rahmen hohl und geschlossen umlaufend sind, die deckelfreien Seiten der Rahmen je einen Sims (4, 5) aufweisen, die einander übergreifen, wobei die Rahmen eine Innenfläche von ca. 11 × 19 cm umgrenzen und im geschlossenen Zustand die Innenraumhöhe etwa 3 cm beträgt, daß an der Außenseite eine Klarsichtfolie (10) randseitig angeschweißt ist, die eine einseitig offene Tasche bildet, und daß die Einlagen in ihren Abmessungen der Rahmengröße entsprechen und flach oder tiefgezogen ausgebildet und an den Deckel geklebt sind.

## Revendications

1. Paquet, composé d'une boîte, que consiste en deux cadres (2, 3) a chaque fois un couvercle (6, 7), ces couvercles se confondrent par un contact d'une bande (8) et les côtés libres des cadres sont posés l'un sur l'autre quand la boîte est fermée, aussi le paquet a un intermède de matière plastique (16), combiné solidement avec le couvercle et cet intermède montre d'équipment fixé (17), par quel on peut tenir des objets d'usage (18-20), marqué par les cadres creux qui vont compact en cours, les côtés de cadre sans couvercle présentent chacun une corniche (4, 5), que où laquelle empiètent sur les uns les autres, les cadres entourent une surface intérieur de ca. 11 × 19 cm et en l'état fermé la hauteur de l'intérieur se monte à ca. 3 cm, comme à le côté externe une feuille lucide est sondée à le côté du bord (10), laquelle forme une poche ouverte d'un côté, et que les intermèdes avec leur hauteur devent être conforme à la grandeur du cadre et pats où étirés profondement et collés à le couvercle.

## Claims

1. Packing, consisting of a case, wich is composed of two frames (2, 3) each covered by a lid (6, 7), in doing so the lids pass over to each other through a connecting strip (8) and the lidfree sides of the frames are lying together when the case is closed also with one inset (16) of plastic material each side fastened to the lids bearing a fixing (17) holding utility articles (18-20), in a way characterized that the frames are hollow and running around totally closed, the lidfree sides of the frames showing each a moulding (4, 5) which are interlocking, while the frames covering an area of ca. 11 × 19 cm and in closed condition the inner measurement is ca. 3 cm, that a see through foil (10) is welded at the border of the outside which builds a pouch with one open side and that the insets in their measurements fitting to the size of the frames and are fastened to the lid and builded flat or deep moulded.

Fig.1

Fig.2

STIFTE

SET

Fig.3